# EUROPEAN PATENT SPECIFICATION

(11) **EP 0 479 368 B1**
(45) Date of publication and mention of the grant of the patent: **25.01.1995**
(21) Application number: 91202479.1
(22) Date of filing: 25.09.1991
(51) Int. Cl.: G01N 29/00, G01N 29/22

(54) **Pulse-echo system and method for detecting discontinuities**
Impulsechogerät und Verfahren zum Feststellen von Fehlstellen
Système et méthode à écho d'impulsions pour détecter des discontinuités

(30) Priority: 04.10.1990 NL 9002156
(43) Date of publication of application: 08.04.1992
(73) Proprietor: Hoogovens Technical Services Inspection Systems BV, 3542 AK Utrecht (NL)
(72) Inventor: Ketelaar, Kees Cornelis Jacobus, NL-1443 JK Purmerend (NL)
(74) Representative: Van Breda, Jacobus, Mr. Ir.

(56) References cited:
- US-A- 3 481 425
- US-A- 4 022 055
- US-A- 4 502 330

## Description

The present invention relates to a pulse-echo system which uses ultra-sound signals to detect discontinuities or flaws. The system includes a transducer for transmitting and receiving pulsed ultra-sound signals which travel to the wall of an article to be inspected for discontinuities. An example of such an article is a pipe wall. The invention also relates to a method for detecting discontinuities in a wall.

This kind of pulse-echo system is known from US-A-4,022,055, which describes the use of reflection means to define a pair of transmission paths for ultra-sound waves whereby the path portions situated between the transducer and the reflection means extend essentially parallel to the wall to be inspected. In accordance with US 4,022,055 a first transmission path is directed perpendicularly to a pipe wall to be inspected and the second of the transmission paths is directed at an angle to the said wall so that ultra-sound waves reaching the pipe wall being inspected enter it via this latter path and continue on their course. There is a short lapse of time between entry of ultra-sound waves along these respective paths. Detection of discontinuities takes place by means of the ultra-sound waves of the said second transmission path. The first transmission path serves for propagation of ultra-sound waves which serve to determine the thickness of the pipe wall.

A problem with this known apparatus is that with the proposed provision of beaming at the pipe wall at an angle, discontinuities may indeed be detected but only those which extend around the circumference of the pipe wall. Sound waves which enter the pipe wall via the second transmission path tend to continue on axially, and have no circumferential component. Consequently cracks or other discontinuities in the longitudinal direction of the pipe wall, or generally parallel to the direction of continuation of the ultra-sound waves may not be detected by this method.

US-A-4,502,330 also discusses a system where two paths of ultra-sound signals are directed towards a wall. The paths do not meet in the wall, and the system is used primarily for detecting wall thickness.

An object of the invention is therefore to improve detection of discontinuities and flaws.

The pulse-echo system in accordance with the invention comprises a transducer for transmitting and receiving ultra-sound signals, reflecting means comprising at least two reflection planes, said reflection planes defining a first and a second path each of which has a portion which is parallel to said wall between the transducer and reflecting means. The two paths meet in the wall essentially perpendicular to each other.

The invention also provides a method for detecting discontinuities and flaws. The method comprises providing two paths for said signals which meet in the wall. The angle at which the two paths meet is essentially a right-angle i.e. the two paths are essentially mutually perpendicular at the point at which they meet in the wall.

Surprisingly it has been found that discontinuities beamed at from two directions in this way can usually be detected by the ultra-sound waves of both paths without so much cross-talk occurring from one transmission path to the other transmission path that detection of the discontinuity becomes disturbed. Because the ultra-sound waves are sent into the wall to be inspected in two independent directions, discontinuities with various orientations in the wall being inspected may be detected by analysis of the reflections received back via the first and the second path.

In the pulse-echo system and method of the invention, pulsed ultra-sound signals are normally employed.

Preferably the first path for the ultra-sound waves defined by the reflection has a portion which is parallel to the longitudinal axis of the wall.

Also preferably, and when the wall to be inspected is part of a pipe, the second path defined by the reflection means will have a circumferential portion within the wall.

In another preferred embodiment of the invention the pulse-echo system is characterized in that the first and the second reflection planes are able to move in relation to one another. In this way the length of the first path and of the second path can be made equal to one another. This has the advantage that the time lapse between transmission by the transducer of the ultra-sound waves and the receiving back of the reflections via the first and the second path, caused, among other reasons, by the discontinuity, can be made equal so that relative comparison is enabled and the analysis of the test results simplified.

The invention will now be illustrated by reference to the accompanying drawing which shows a pipe in which a pulse-echo system embodying the invention is drawn, as a non-limitative example of the invention.

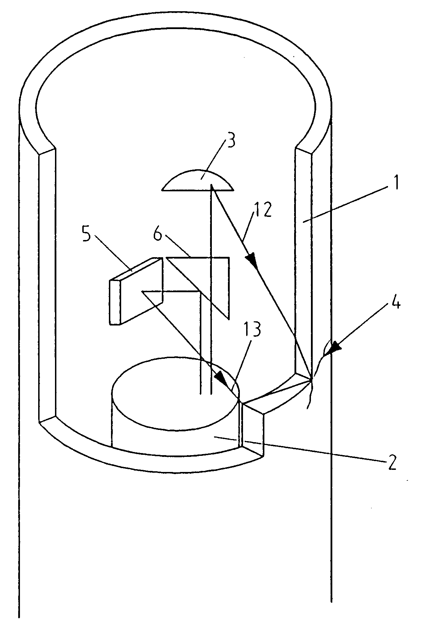

The drawing 1 shows a transducer 2 for transmitting and receiving back ultra-sound waves, located in a pipe 1. A first path of ultra-sound waves is defined by the co-operation of the transducer 2 and a reflection plane 3 which converts an axial path component between the transducer 2 and the reflection plane 3 into a path component 12 in the direction of the inner wall of the pipe 1. This path component has a component which is longitudinal to the axis. The ultra-sound waves which reach the wall of pipe 1 via this path 12 enter the wall and continue on in a direction having an axial component to a discontinuity 4 to be detected in the wall of the pipe 1. This discontinuity 4 causes a reflection of the ultra-sound waves arriving via path 12. The reflected ultra-sound waves travel via path 12 in the reverse direction up to transducer 2 which detects the reflections. The transducer 2 is further linked to an oscilloscope which can make the detected reflections visible.

A second path of ultra-sound waves is defined by the transducer 2 in co-operation with a reflection plane 5, the ultra-sound waves being directed by an eccentric mirror 6. The eccentric mirror 6 is needed to direct the waves at the reflection plane 5 which is located somewhat off the centre of the transducer 2 so that the ultra-sound waves are directed onto the inner wall of the pipe 1 in a direction which diverges from that of the first path 12. Propagation of ultra-sound signals takes place via reflection plane 5 along path 13 in the direction of the inner wall of the pipe 1. After entering the pipe wall the ultra-sound waves continue to travel along this path 13 in a direction which is essentially perpendicular to that of the ultra-sound waves of path 12 up to the discontinuity 4. Once at discontinuity 4, reflection again occurs, now of the ultra-sound waves of path 13, in the reverse direction. The reflected ultra-sound waves are then detected with transducer 2 and made visible on the oscilloscope.

Reflection plane 5 and reflection plane 3 are able to move relative to one another in such a way that the lengths of the transmission paths 12 and 13 can be made equal to each other and also so that the transmission period of the ultra-sound waves from the transducer 2 up to the discontinuity 4 and back is made equal for both paths. Consequently the differing reflections observed with the oscilloscope occur at the same times thus enabling a simple relative comparison and simplified analysis of the test results.

## Claims

1. A pulse-echo system for detecting discontinuities in a wall (1) comprising a transducer (2) for transmitting and receiving ultra-sound signals, reflecting means comprising at least two reflecting planes (3,5,6), said reflecting planes defining a first and a second path (12,13) for said signals, each of said paths including a portion between said transducer (2) and the reflecting means, said portion being parallel to said wall, characterised in that said two paths meet in the wall at a right-angle.

2. A system according to claim 1 wherein at least two said reflecting planes defining said two paths are movable relative to each other to vary at least one of the path lengths.

3. A system according to claim 1 or claim 2 wherein said first path 12 has a portion which is parallel to a longitudinal axis of said wall, within said wall.

4. A system according to any preceding claim wherein the system is adapted to detect discontinuities in the wall of a cylindrical pipe.

5. A system according to claim 4 wherein said second path 13 has a circumferential portion, within said wall.

6. A method of detecting discontinuities in a wall using ultra-sound signals comprising providing a transducer (2) for transmitting and receiving said ultra-sound signals and reflecting means with at least two reflecting planes (3,5,6), said reflecting planes defining two paths (12,13) for said signals, each of said paths including a portion between said transducer (2) and the reflecting means, said portion being parallel to said wall, characterized in that said paths meet in the wall at right angles.

7. A method according to claim 6 wherein the wall is a wall of a cylindrical pipe and one of said paths has a circumferential portion in the wall.

8. A method according to claim 6 or claim 7 wherein one of said paths has a portion which is parallel to a longitudinal axis of said wall.

9. A method according to any of claims 6 to 8 wherein the length of at least one of said two paths is varied to make the lengths of said two paths equal.

## Patentansprüche

1. Ein Impulsechosystem zur Erfassung von Unstetigkeiten in einer Wand (1) mit einem Signalumformer (2) zum Senden und Empfangen von Ultraschallsignalen, mit Reflexionsmitteln, die zumindest zwei Reflexionsebenen (3, 5, 6) aufweisen, wobei besagte Reflexionsebenen einen ersten und einen zweiten Weg (12, 13) für besagte Signale definieren und jeder der besagten Wege einen Abschnitt zwischen besagtem Signalumformer (2) und den Reflexionsmitteln einschließt und besagter Abschnitt parallel zu besagter Wand ist,
dadurch gekennzeichnet, daß sich beide besagte Wege in der Wand in einem rechten Winkel treffen.

2. Ein System nach Anspruch 1,
bei dem zumindest zwei besagte Reflexionsebenen, die die zwei besagten Wege definieren, relativ zueinander beweglich sind, um zumindest einer der Weglängen zu variieren.

3. Ein System nach Anspruch 1 oder Anspruch 2,
bei dem besagter erster Weg (12) einen Abschnitt hat, der innerhalb besagter Wand parallel zu der Längsachse besagter Wand ist.

4. Ein System nach einem der vorangehenden Ansprüche, bei dem das System dazu geeignet ist, um Unstetigkeiten in der Wand eines zylindrischen Rohrs zu erfassen.

5. Ein System nach Anspruch 4,
bei dem besagter zweiter Weg (13) einen Umfangsabschnitt innerhalb besagter Wand hat.

6. Ein Verfahren zur Erfassung von Unstetigkeiten in einer Wand unter Verwendung von Ultraschallsignalen, bei dem ein Signalumformer (2) zum Senden und Empfangen besagter Ultraschallsignale und Reflexionsmittel mit zumindest zwei Reflexionsebenen (3, 5, 6) vorgesehen sind, wobei besagte Reflexionsebenen zwei Wege (12, 13) für besagte Signale definieren und jeder der besagten Wege einen Abschnitt zwischen besagtem Signalumformer (2) und den Reflexionsmitteln einschließt und besagter Abschnitt parallel zu besagter Wand ist,
dadurch gekennzeichnet, daß sich besagte Wege in der Wand in einem rechten Winkel treffen.

7. Ein Verfahren nach Anspruch 6,
bei dem die Wand eine Wand eines zylindrischen Rohrs ist und einer der besagten Wege einen Umfangsabschnitt in der Wand hat.

8. Ein Verfahren nach Anspruch 6 oder Anspruch 7,
bei dem einer der besagten Wege einen Abschnitt hat, der parallel zu der Längsachse der besagten Wand verläuft.

9. Ein Verfahren nach einem der Ansprüche 6 bis 8,
bei dem die Länge zumindest einer der besagten zwei Wege variiert wird, um die Längen besagter zwei Wege anzugleichen.

## Revendications

1. Système à écho d'impulsions pour détecter des discontinuités dans une paroi (1), qui comprend une sonde (2) pour envoyer et recevoir des signaux ultrasonores, un moyen réfléchissant qui comprend au moins deux plans de réflexion (3, 5, 6) lesdits plans de réflexion définissant des premier et second trajets (12, 13) pour lesdits signaux, chaque trajet comprenant une partie placée entre ladite sonde (2) et le moyen réfléchissant, ladite partie étant parallèle à ladite paroi,
caractérisé en ce que lesdits deux trajets se coupent à angle droit dans la paroi.

2. Système selon la revendication 1, dans lequel deux plans de réflexion au moins qui définissent lesdits deux trajets sont mobiles l'un par rapport à l'autre pour faire varier la longueur de l'un au moins des trajets.

3. Système selon la revendication 1 ou 2, dans lequel ledit premier trajet (12) comporte une partie qui est parallèle à l'axe longitudinal de ladite paroi, à l'intérieur de ladite paroi.

4. Système selon l'une quelconque des précédentes revendications, dans lequel le système est apte à détecter des discontinuités dans la paroi d'un tube cylindrique.

5. Système selon la revendication 4, dans lequel ledit second trajet (13) comporte une partie qui est disposée suivant la circonférence, à l'intérieur de ladite paroi.

6. Procédé pour détecter des discontinuités dans une paroi en utilisant des signaux ultrasonores, qui comprend l'utilisation d'une sonde (2) pour envoyer et recevoir lesdits signaux ultrasonores et d'un moyen réfléchissant qui comprend au moins deux plans de réflexion (3, 5, 6), lesdits plans de réflexion définissant deux trajets (12, 13) pour lesdits signaux, chaque trajet comprenant une partie placée entre ladite sonde (2) et le moyen réfléchissant, ladite partie étant parallèle à ladite paroi,
caractérisé en ce que lesdits trajets se coupent à angle droit dans la paroi.

7. Procédé selon la revendication 6, dans lequel la paroi est une paroi d'un tube cylindrique et l'un desdits trajets comporte une partie placée suivant la circonférence, à l'intérieur de ladite paroi.

8. Procédé selon la revendication 6 ou la revendication 7, dans lequel l'un desdits trajets comporte une partie qui est parallèle à l'axe longitudinal de ladite paroi.

9. Procédé selon l'une quelconque des revendications 6 à 8, dans lequel la longueur de l'un au moins desdits deux trajets est modifiée pour rendre égales les longueurs desdits deux trajets.
